# EUROPÄISCHE PATENTANMELDUNG

(11) **EP 3 543 984 A1**
(43) Veröffentlichungstag der Anmeldung: **25.09.2019**
(21) Anmeldenummer: 18162810.8
(22) Anmeldetag: 20.03.2018
(51) Int. Cl.: G08G 1/04, G08G 1/042, H02J 50/20

(54) **FAHRZEUGERFASSUNGSSYSTEM**

(71) Anmelder: Its Light Technic Solution AG, 8370 Sirnach (CH)
(72) Erfinder: BRÜGGER, Georg, 8203 Schaffhausen (CH); LANGER, Thomas, 8370 Sirnach (CH); BRITT, Daniel, 8405 Winterthur (CH)
(74) Vertreter: Keller & Partner Patentanwälte AG

(57) **Zusammenfassung**

Für ein Fahrzeugerfassungssystem zum Überwachen von ruhendem und bewegtem Verkehr ist ein Bodensensor (1) mit einem Belegungssensor (6) zur Erfassung eines Fahrzeugs vorgesehen, wobei der Bodensensor (1) einen Energiespeicher (4) aufweist, der mit einem Mikroprozessor (2) verbunden ist, welcher Mikroprozessor (2) zum einen eine Verbindung mit dem Belegungssensor (6) und zum anderen eine Verbindung mit einem Kommunikationsmodul (7) aufweist, und wobei der Energiespeicher (4) aus einem RF-Energiewandler (3) mittels einer RF-Sendeenergie (3a) mit Energie versorgbar ist.

## Beschreibung

### Technisches Gebiet

Die vorliegende Erfindung fällt in das technische Gebiet der Anlagen zur Verkehrsregelung und Verkehrsüberwachung von Fahrzeugen; sie betrifft vorliegend ein Fahrzeugerfassungssystem gemäss dem Oberbegriff des Anspruchs 1 und ein Verfahren zum Betrieb eines Fahrzeugerfassungssystems gemäss dem Oberbegriff des Anspruchs 10.

### Stand der Technik

Fahrzeugerfassungssysteme sind zum Erfassen beziehungsweise Führen von Fahrzeugen hinlänglich auch aus der Patentliteratur bekannt, und zwar sowohl für den bewegten als auch für den ruhenden Verkehr. Dabei dienen sogenannte Verkehrsleitsysteme oder Parkleitsysteme dazu, Fahrzeuglenker beispielsweise von Orten hoher Verkehrsdichte auf Umfahrungen aufmerksam zu machen bzw. in Agglomerationen zu Parkplätzen mit freier Kapazität zu führen. Derartige Fahrzeugerfassungssysteme können Bodensensoren umfassen, die beim Zufahren oder Überfahren eines Fahrzeugs selbiges registrieren und anschliessend eine entsprechende Information an ein Leitsystem weitergeben.

Herkömmliche Bodensensoren können für ihre Energieversorgung bzw. für ihre Kommunikation mit einem Leitsystem drahtgebunden sein, das bedeutet, dass bei der Installation solcher Bodensensoren neben deren Verankerung am Boden, ebenfalls Leitungen für die Speisung und die Kommunikation verlegt werden müssen, was mit einem entsprechenden Aufwand hinsichtlich Installationszeit und Installationsmaterial verbunden ist. Um diesen Aufwand zu verringern, werden zeitgemässe Fahrzeugerfassungssystem mit Bodensensoren aufgebaut, die über Funksignale mit einem Leitsystem eine Einwegkommunikation oder eine Zweiwegkommunikation durchführen können und zudem eine eigene Energiespeisung aufweisen. Solche Bodensensoren bedürfen dann lediglich der eigenen Installation an einem gewünschten Ort auf Verkehrswegen oder Parkplätzen.

Aus der DE 10 2010 010 579 A1 ist beispielsweise ein Stellplatz-Managementsystem für eine Parkeinrichtung bekannt, wobei freie Stellplätze der Parkeinrichtung identifiziert werden können und Informationen betreffend die freien Stellplätze an eine zentrale Leitstelle des Managementsystems mittels einer Funksignalübertragung übermittelt werden können; jeder Stellplatz ist hierfür mit einem Bodensensor ausgestatte. Es wird vorgeschlagen, dass diese Bodensensoren als energieautarke Funksensoren ausgebildet sein sollen, bei denen entweder ein Akkumulator oder eine Batterie Verwendung findet oder als Energiewandler bei ausreichender Besonnung ein Solarmodul zwecks Speisung zum Einsatz gelangt.

Die DE 10 2015 211 053 A1 offenbart ebenfalls einen auf einer Funksignalkommunikation abstellenden Bodensensor eines Fahrzeugerfassungssystems, wobei dieser Bodensensor möglichst energiesparend ausgebildet sein soll und hierfür neben einer Batterie zudem mit einem Solarmodul ausgestattet sein soll. Mit Blick auf einen möglichst ökonomischen wie ökologischen Betrieb des Bodensensors, ist selbiger mit einer periodischen Stellplatzabtastung versehen, womit der Bodensensor in einen energiesparenden Modus versetzt werden kann.

Auch in der DE 10 2005 034 372 A1 steht der Energieverbrauch von Bodensensoren bei Fahrzeugerfassungssystemen mit Funkkommunikation im Fokus. Um den Energieverbrauch in einem Bodensensor klein zu halten, wird hier vorgeschlagen, dass lediglich eine Basissensoreinrichtung permanent in Betrieb sein soll und lediglich bei Bedarf weitere Zusatzsensoreinrichtungen aktiviert werden sollen.

Allen Fahrzeugerfassungssystemen in den oben zitierten Druckschriften ist gemeinsam, dass bei einer nicht leitungsgebundenen Energieversorgung der verwendeten Bodensensoren ein besonderes Augenmerk auf einen geringen Energieverbrauch gelegt werden muss. Wenn dem Energieverbrauch in einem Bodensensor nicht Rechnung getragen wird, kann dies beispielsweise dazu führen, dass Batterien oder Akkumulatoren in Bodensensoren einer Wartung mit unerwünscht kleinem Wartungsintervall bedürfen. Ferner ist im Stand der Technik auffallend, dass selbst die Verwendung von Solarmodulen zur Speisung von Bodensensoren problematisch sein kann, dann nämlich, wenn die Besonnung des Solarmoduls nicht ausreichend ist, um einen permanenten Betrieb des Bodensensors zu gewährleisten; insbesondere nachts oder in dunkleren Parkbereichen von Parkhäusern, kann der Energieverbrauch eines Bodensensors das Speisepotenzial mittels eines Solarmoduls übersteigen; an dieser Stelle sei der guten Ordnung halber erwähnt, dass der Verwendung grösserer Solarmodule mit entsprechend grösserem Energiewandlungspotenzial die gewünscht möglichst kleine Baugrösse von Bodensensoren und selbstredend die höheren Gestehungskosten entgegenstehen.

### Darstellung der Erfindung

Es ist deshalb Aufgabe der vorliegenden Erfindung, ein Fahrzeugerfassungssystem und ein Verfahren zum Betrieb eines Fahrzeugerfassungssystems dahingehend weiterzubilden, dass gegenüber dem Stand der Technik eine verbesserte Energieversorgung eines in diesem Fahrzeugerfassungssystem zum Einsatz gelangenden Bodensensors ermöglicht wird.

Die der Erfindung für das Fahrzeugerfassungssystem zugrunde liegende Aufgabe wird gelöst durch die Merkmale des Anspruchs 1; die diesen Erfindungsgedanken weiterbildenden Merkmale sind Gegenstand der Unteransprüche 2 bis 9.

Der Kern der vorliegenden Erfindung für ein Fahrzeugerfassungssystem ist darin zu sehen, dass dieses Fahrzeugerfassungssystem zum Überwachen von ruhendem und bewegtem Verkehr einen Bodensensor mit einem Belegungssensor zur Erfassung eines Fahrzeugs umfasst, wobei der Bodensensor einen Energiespeicher aufweist, der mit einem Mikroprozessor verbunden ist, welcher Mikroprozessor zum einen eine Verbindung mit dem Belegungssensor und zum anderen eine Verbindung mit einem Kommunikationsmodul aufweist, und wobei der Energiespeicher aus einem RF-Energiewandler (Radiofrequenz-Energiewandler) mittels einer RF-Sendeenergie (Radiofrequenz-Sendeenergie) mit Energie versorgbar ist. Von besonderem Vorteil dabei ist, dass der Bodensensor, der frei von jeder Zuleitung ausgestaltet ist, permanent mit elektrischer Energie versorgbar ist und dabei zudem unabhängig von anderen Energiespeisemöglichkeiten, wie einer Batterie beispielsweise, ist. Gegenüber Fahrzeugerfassungssystemen, deren Speisung im Wesentlichen auf Solarenergie abstellt, hat die vorliegende Erfindung den Vorteil, dass sie auch bei geringster bis keiner Besonnung funktionstüchtig ist. Somit sind Fahrzeugerfassungssystem nach der Erfindung allerorts einsetzbar, auch dort, wo beispielsweise geographisch bedingt über Monate keine effektive Nutzung von Solarenergie möglich ist. Darüber hinaus ist das vorliegende Fahrzeugerfassungssystem über die gesamte Lebensdauer hinweg weitgehend wartungsfrei, da es keinerlei Bedarf für einen Eingriff in die Energieversorgung gibt.

Eine vorteilhafte Weiterbildung der Erfindung ist in der zusätzlichen Verwendung eines Solarmoduls zu sehen, da somit zu Zeiten ausreichender Besonnung ein besonders energiesparender Betrieb des Fahrzeugerfassungssystems ermöglicht wird. Hierfür ist vorgesehen, das Solarmodul ebenfalls unmittelbar mit dem Energiespeicher des Bodensensors zu verbinden.

Eine weitere vorteilhafte Ausgestaltung der Erfindung ist in der Verwendung eines Peltier-Elements für die Energieversorgung zu sehen. Lokale Temperaturdifferenzen in einem Bodensensor ermöglichen dabei die Energiewandlung im Peltier-Element und somit die Speisung des Energiespeichers. Eine besonders vorteilhafte Ausführungsform der Erfindung sieht vor, dass das Peltier-Element über eine besonders wärmeleitfähige Wärmebrücke mittels eines unmittelbaren Berührungskontakts an dem Solarmodul angeordnet ist, da sich Solarmodule bei Besonnung erwärmen und somit ein grösseres, elektrisch nutzbares Temperaturdelta für das Peltier-Element zur Verfügung steht, als wenn dieses getrennt vom Solarmodul im Bodensensor angeordnet ist.

Mit Vorteil umfasst der Bodensensor ferner eine RF-Ladepumpe (Radiofrequenz-Ladepumpe), die ebenfalls mit dem Energiespeicher verbunden ist und dessen Ladung mittels RF-Ladeenergie ermöglicht. In Fällen einer Tiefentladung des Energiespeichers oder bei einer initialen Inbetriebnahme ist es somit erfindungsgemäss möglich, den Bodensensor quasi am Installationsort mit elektrischer Energie zu versorgen, selbst dann, wenn noch keine RF-Sendeenergie verfügbar ist.

Die zusätzliche Installation einer Spannungsüberwachung, die mit dem Mikroprozessor verbunden ist, stellt eine weitere vorteilhafte Ausführungsform der Erfindung dar, weil hierdurch ein Spannungsabfall des Energiespeichers ermittelt und über das Kommunikationsmodul nach extern kommunizierbar ist; diese Installation eröffnet die Möglichkeit einer zeitnahen Fehlererkennung im Gesamtsystem des erfindungsgemässen Fahrzeugerfassungssystems. Beispielsweise können so Fehler des Energiespeichers erkannt werden oder Fehler bei der Energieaufladung mittels der RF-Sendeenergie.

Mit Vorteil umfasst das erfindungsgemässe Fahrzeugerfassungssystemsystem zur Erfassung eines Fahrzeugs im Bodensensor ferner einen Helligkeitssensor und/oder einen Hallsensor, die jeweils mit dem Mikroprozessor verbunden sind. Diese genannten zusätzlichen Sensoren sind für eine besonders fehlerfreie Erfassung von Fahrzeugen mittels einer logischen Und-Verknüpfung im Zusammenspiel mit dem Belegungssensor dienlich.

In einer vorteilhaften Ausführungsform der Erfindung ist vorgesehen, dass der Belegungssensor als ein Bewegungsmelder -ein sogenannter PIR-Sensorausgebildet ist, da Bewegungsmelder grundsätzlich rasch reagieren und einfach zu kalibrieren sind. Es ist aber auch denkbar, dass der Belegungssensor beispielsweise als ein Radarsensor, ein Drucksensor, ein Magnetfeldsensor, ein Ultraschallsensor oder als ein kapazitiver, induktiver oder optischer Sensor ausgebildet ist.

Besonders geeignet ist das erfindungsgemässe Fahrzeugerfassungssystem sowohl im fliessenden Verkehr in einer Wirkverbindung mit einem Verkehrsleitsystem oder für den ruhenden Verkehr in einem Parkleitsystem für Verkehrswege, Parkplätze oder in Parkhäusern. Dieses neue Fahrzeugerfassungssystem ermöglicht dabei zudem die Regelung von Zufahrtsberechtigungen oder die Verrechnung von Verkehrsabgaben für Verkehrswegenutzung; ferner ist das hier in Rede stehende Fahrzeugerfassungssystem bei der Parkzeiterfassung bzw. Parkgebührenverrechnung dienlich.

Der guten Ordnung halber sei erwähnt, dass in dem erfindungsgemässen Fahrzeugerfassungssystem als Energiespeicher jeder handelsübliche, elektrische Energiespeicher zum Einsatz gelangen kann, z.B. Akkumulatoren, Super-Caps oder ähnliche Energiespeicher.

Die der Erfindung für das Verfahren zum Betrieb eines Fahrzeugerfassungssystems zugrunde liegende Aufgabe wird gelöst durch die Merkmale des Anspruchs 10.

Der Kern der Erfindung für das Verfahren zum Betrieb eines Fahrzeugerfassungssystems zum Überwachen von ruhendem und bewegtem Verkehr ist darin zu sehen, dass ein das Fahrzeugerfassungssystem umfassender Bodensensor ein Fahrzeug mittels eines Belegungssensors erfasst, wobei der Bodensensor einen Energiespeicher aufweist, der mit einem Mikroprozessor verbunden ist, welcher Mikroprozessor zum einen eine Verbindung mit dem Belegungssensor und zum anderen eine Verbindung mit einem Kommunikationsmodul aufweist, und wobei der Energiespeicher aus einem RF-Energiewandler (Radiofrequenz-Energiewandler) mittels einer RF-Sendeenergie (Radiofrequenz-Sendeenergie) mit Energie versorgt wird.

Sämtliche sich aus diesem erfindungsgemässen Verfahren ergebenden Vorteile wurden bereits oben bezüglich des Fahrzeugerfassungssystems hinlänglich erörtert und werden deshalb an dieser Stelle nicht wiederholt.

### Kurze Beschreibung der Zeichnungen

Im Folgenden wird die Erfindung anhand von Figuren beispielhaft erläutert. Gleiche Gegenstände sind in den Figuren grundsätzlich mit gleichen Bezugszeichen bezeichnet. Es zeigen rein schematisch die
- Fig. 1: ein Fahrzeugerfassungssystem gemäss der Erfindung,
- Fig. 2: eine Ausführungsform der Erfindung gemäss Fig. 1,
- Fig. 3: eine weitere Ausführungsform des erfindungsgemässen Fahrzeugerfassungssystems, und
- Fig. 4: noch eine weitere Ausführungsform des erfindungsgemässen Fahrzeugerfassungssystems.

### Wege zur Ausführung der Erfindung

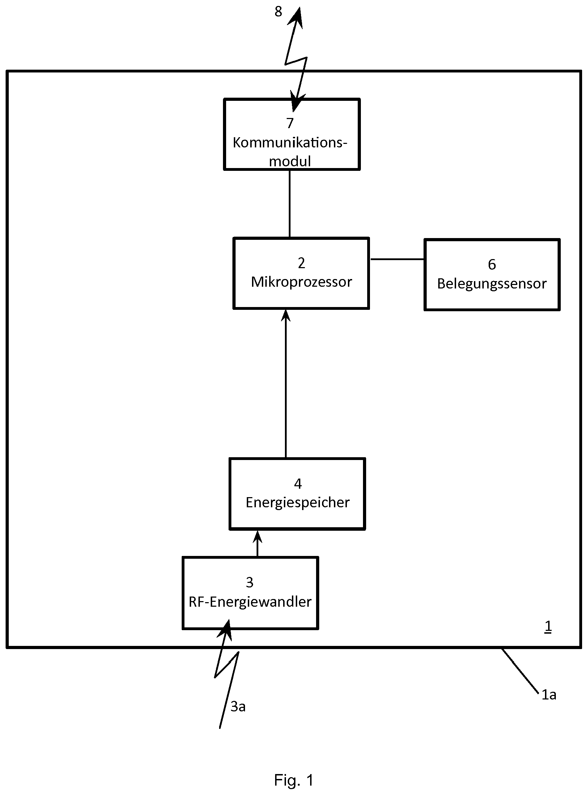

Fig. 1 zeigt das erfindungsgemässe Fahrzeugerfassungssystem schematisch anhand eines Blockschaltbilds mit einem Bodensensor 1, der von einer Gehäusewand 1a umgeben ist. Diese Gehäusewand 1a ist zum Zweck einer guten thermischen Isolation doppelwandig ausgestaltet, um die gesamte elektrische Installation innerhalb des Bodensensors 1 gegen äussere Wärmequellen bzw. Wärmesenken weitgehend abzuschotten bzw. zu schützen. Bekanntermassen können Bodensensoren 1 dieser Art auch im Freien installiert werden, so dass sie jahreszeitlich entsprechenden Temperaturunterschieden ausgesetzt sein können. Durch eine doppelwandige Gehäusewand 1a wird im Bodensensor 1 ein Jahrestemperaturverlauf ermöglicht, dessen Dynamik massgeblich kleiner ist als mit herkömmlichen einfachen Gehäusewandungen.

Der Bodensensor 1 umfasst als eine zentrale Einheit einen Mikroprozessor 2, der jeweils eine Verbindung mit einem Belegungssensor 6 und einem Kommunikationsmodul 7 aufweist und zudem über einen Energiespeicher 4 mit einem RF-Energiewandler 3 (Radiofrequenz-Energiewandler) verbunden ist. Erfindungsgemäss wird der Bodensensor 1 durch externe RF-Sendeenergie 3a (Radiofrequenz-Sendeenergie) mit Energie gespeist, die über den RF-Energiewandler 3 als elektrische Energie dem Energiespeicher 4 zugeführt wird und nachfolgend der Speisung aller Komponenten im Bodensensor 1 dient. Der RF-Energiewandler 3 umfasst hierfür eine entsprechend ausgeführte RF-Antenne, die aufgrund ihrer Bekanntheit in den Figuren nicht explizit dargestellt ist. Über eine weitere, separate - hier ebenfalls nicht explizit dargestellte- RF-Antenne im Kommunikationsmodul 7 kann der Bodensensor 1 mittels RF-Kommunikation 8 bidirektional extern kommunizieren. Mit dem Belegungssensor 6 werden Fahrzeuge des ruhenden sowie des bewegten Verkehrs erfasst und entsprechende Funksignale über die RF-Kommunikation 8 zu hier nicht dargestellten Leitsystemen gesandt.

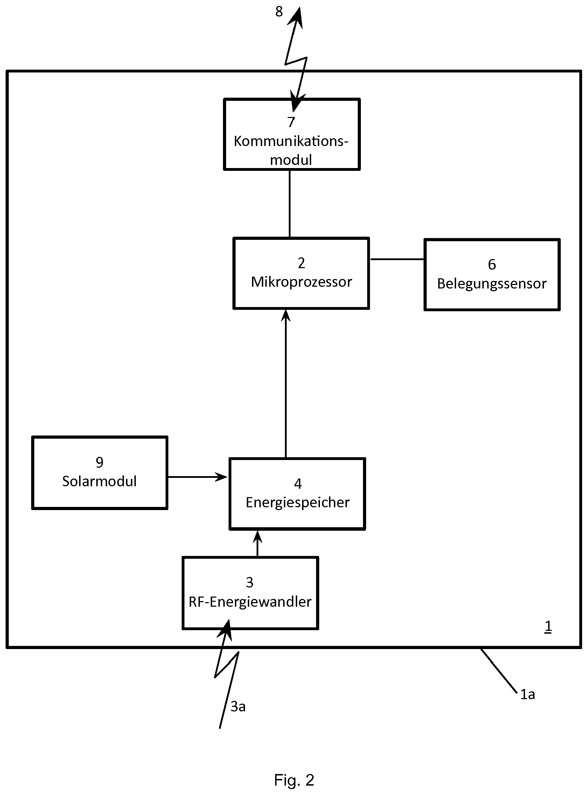

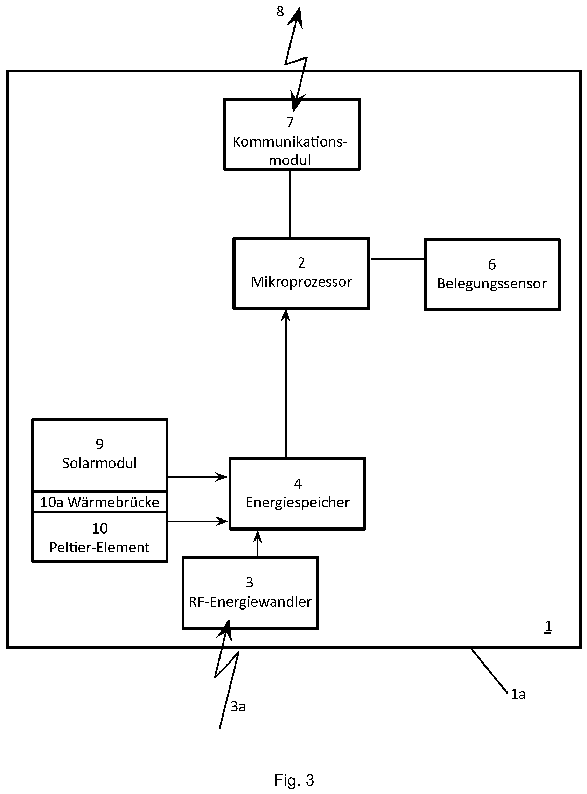

Die Fig. 2 zeigt eine Ausführungsform der Erfindung, bei welcher der Bodensensor 1 zusätzlich ein Solarmodul 9 umfasst, welches ebenfalls mit dem Energiespeicher 4 verbunden ist; dieses Solarmodul 9 ermöglicht neben der Speisung über den RF-Energiewandler 3 eine besonders energiesparende weitere Speisung, die in Abhängigkeit der Besonnung, die Energieversorgung des Bodensensors 1 unterstützen oder vollständig übernehmen kann. Den energiesparenden Gedanken weitertragend weist die Ausführungsform der Erfindung in Fig. 3 zusätzlich ein Peltier-Element 10 auf, welches sich an der Energieversorgung des Bodensensors 1 beteiligt. Die Energieausbeute des Peltier-Elements 10 ist dabei besonders gross, wenn das Peltier-Element 10 über eine gut leitende Wärmebrücke 10a in Berührungskontakt mit dem Solarmodul 9 tritt, da sich Solarmodule 9 bei Besonnung erwärmen und somit das Temperaturdelta für die Energiewandlung im Peltier-Element 10 begünstigen.

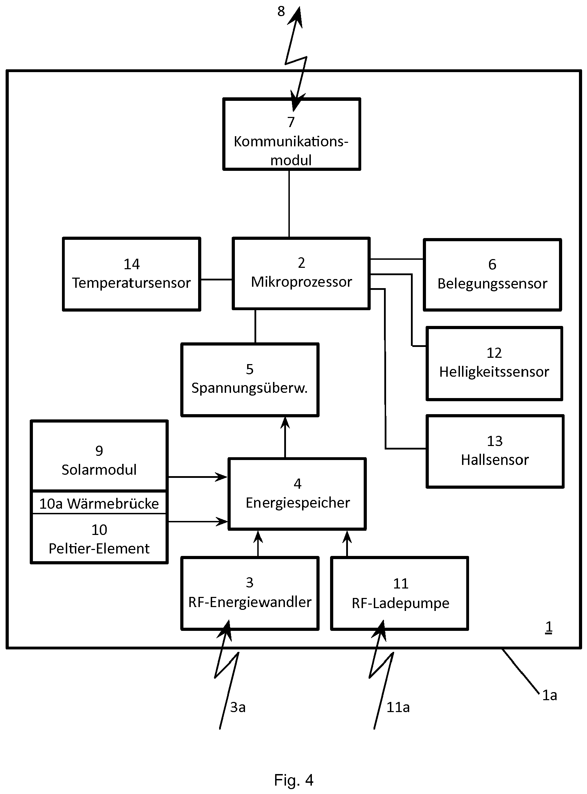

In einer weiteren Ausführungsform der Erfindung zeigt die Fig. 4 eine Spannungsüberwachung 5, die zwischen dem Energiespeicher 4 und dem Mikroprozessor 2 angeordnet ist; diese Spannungsüberwachung 5 ermöglicht eine frühzeitige Fehlererkennung in der gesamten Speisung des Bodensensors 1 und gegebenenfalls die Zu- bzw. Abschaltung einzelner oder mehrerer Speisungen. Für den Fall einer Totalentladung des Energiespeichers 4 -zum Beispiel bei einer initialen Inbetriebnahme- kann der Bodensensor 1 mittels einer zusätzlichen RF-Ladepumpe 11 vor Ort mittels RF-Ladeenergie 11a gespeist werden; eine hierfür geeignete Spulenanordnung ist in der RF-Ladepumpe 11 integriert und somit hier nicht explizit gezeigt.

Der Belegungssensor 6 zur Fahrzeugerfassung kann -wie bereits erwähntals Bewegungsmelder (PIR-Sensor) ausgebildet sein; für eine Verifikation der Fahrzeugerfassung mittels des Belegungssensors 6 umfasst der Bodensensor 1 ferner einen Helligkeitssensor 12 und/oder einen Hallsensor 13 zur Fahrzeugerfassung auf, die gegebenenfalls zu- oder abgeschaltet werden können. Darüber hinaus ist der Bodensensor 1 mit einem Temperatursensor 14 zwecks Überwachung und Kommunikation der Innentemperatur des Bodensensor 1 ausgestattet.

## Patentansprüche

1. Fahrzeugerfassungssystem zum Überwachen von ruhendem und bewegtem Verkehr, umfassend einen Bodensensor (1) mit einem Belegungssensor (6) zur Erfassung eines Fahrzeugs, wobei der Bodensensor (1) einen Energiespeicher (4) aufweist, der mit einem Mikroprozessor (2) verbunden ist, welcher Mikroprozessor (2) zum einen eine Verbindung mit dem Belegungssensor (6) und zum anderen eine Verbindung mit einem Kommunikationsmodul (7) aufweist, **dadurch gekennzeichnet, dass** der Energiespeicher (4) aus einem RF-Energiewandler (3) mittels einer RF-Sendeenergie (3a) mit Energie versorgbar ist.

2. Fahrzeugerfassungssystem nach Anspruch 1, **dadurch gekennzeichnet, dass** der Bodensensor (1) ferner ein Solarmodul (9) umfasst, welches mit dem Energiespeicher (4) verbunden ist.

3. Fahrzeugerfassungssystem nach Anspruch 2, **dadurch gekennzeichnet, dass** der Bodensensor (1) ferner ein Peltier-Element (10) umfasst, welches mit dem Energiespeicher (4) verbunden ist.

4. Fahrzeugerfassungssystem nach Anspruch 3, **dadurch gekennzeichnet, dass** das Peltier-Element (10) über eine Wärmebrücke (10a) mit dem Solarmodul (9) einen Berührungskontakt aufweist.

5. Fahrzeugerfassungssystem nach einem der vorhergehenden Patentansprüche, **dadurch gekennzeichnet, dass** der Bodensensor (1) ferner eine RF-Ladepumpe (11) umfasst, die ebenfalls mit dem Energiespeicher (4) verbunden ist.

6. Fahrzeugerfassungssystem nach Anspruch 5, **dadurch gekennzeichnet, dass** zwischen dem Energiespeicher (4) und dem Mikroprozessor (2) eine Spannungsüberwachung (5) angeordnet ist.

7. Fahrzeugüberwachungssystem nach einem der vorhergehenden Ansprüche, **dadurch gekennzeichnet, dass** der Bodensensor (1) ferner einen Helligkeitssensor (12) zur Erfassung eines Fahrzeugs aufweist, der mit dem Mikroprozessor (2) verbunden ist.

8. Fahrzeugerfassungssystem nach einem der vorhergehenden Ansprüche, **dadurch gekennzeichnet, dass** der Bodensensor (1) ferner einen Hallsensor (13) zur Erfassung eines Fahrzeugs aufweist, der mit dem Mikroprozessor (2) verbunden ist.

9. Fahrzeugerfassungssystem nach einem der vorhergehenden Ansprüche, **dadurch gekennzeichnet, dass** der Belegungssensor (6) als ein Bewegungsmelder (PIR-Sensor) ausgebildet ist.

10. Verfahren zum Betrieb eines Fahrzeugerfassungssystems zum Überwachen von ruhendem und bewegtem Verkehr, bei welchem ein Bodensensor (1) ein Fahrzeug mittels eines Belegungssensors (6) erfasst, wobei der Bodensensor (1) einen Energiespeicher (4) aufweist, der mit einem Mikroprozessor (2) verbunden ist, welcher Mikroprozessor (2) zum einen eine Verbindung mit dem Belegungssensor (6) und zum anderen eine Verbindung mit einem Kommunikationsmodul (7) aufweist, **dadurch gekennzeichnet, dass** der Energiespeicher (4) aus einem RF-Energiewandler (3) mittels einer RF-Sendeenergie (3a) mit Energie versorgt wird.
